# EUROPEAN PATENT SPECIFICATION

(11) **EP 2 124 387 B1**
(45) Date of publication and mention of the grant of the patent: **18.09.2013**
(21) Application number: 09006734.9
(22) Date of filing: 19.05.2009
(51) Int. Cl.: H04L 12/18

(54) **Distribution of broadband multimedia streams in WiFi connections**
Verteilung von Breitband-Multimedia-Streams in WiFi-Verbindungen
Distribution des flux multimédia à large bande dans des connexions wifi

(30) Priority: 20.05.2008 ES 200801467
(43) Date of publication of application: 25.11.2009
(73) Proprietor: Telefónica, S.A., 28013 Madrid (ES)
(72) Inventor: De Vega Mayordomo, Ignacio, 28043 Madrid (ES); Rodriguez Rodriguez, Pablo, 28043 Madrid (ES); Vallina Rodríguez, Narseo, 28013 Madrid (ES)
(74) Representative: Gonzalez-Alberto Rodriguez, Natalia

(56) References cited:
- WO-A-2005/036818
- US-A1- 2007 189 290
- US-A1- 2008 186 896
- QUACCHIA ET AL: "TR-135. DATA MODEL FOR A TR-069 ENABLED STB" INTERNET CITATION, [Online] vol. 1, no. tr-135, 31 December 2007 (2007-12-31), pages 1-114, XP002512769 Retrieved from the Internet: URL:http://www.broadband-forum.org/technic al/download/TR-135.pdf> [retrieved on 2009-01-30]

## Description

### Field of the Art

The present invention relates, within the area of telecommunications, to the field of multimedia content transmission over digital networks and more particularly to the distribution of broadband multimedia contents by means of WiFi (Wireless Fidelity) connections.

### State of the Art

Current installations for the distribution of broadband multimedia contents in the home, in services of the "Imagenio" type of *Telefónica* or the like, require the installation of wiring between the ADSL modem/router and the set-top box (STB), becoming an obstacle for implementing this digital television service for many users since a cable has to be run from one location to another, sometimes not close, within the home.

It would be desirable to replace the home Ethernet wiring with wireless WiFi connection. However, WiFi technology has limitations for carrying broadband streams in multicast mode because it restricts the physical speed to the lowest speed and is therefore not suitable for the volume of the multimedia stream between router and STB.

The solutions proposed today directly convert a multicast packet into one or more unicast packets, with the understanding that all they are doing is taking the data from the multicast packet and re-writing the destination address of the packets so that they are unicast, sending them to each of the stations that have subscribed to the multicast group; accordingly the multicast information would disappear.

As a result of the foregoing, in the prior art the destination station would directly receive unicast packets with the data. This may work in some cases, but there are others in which it does not because it is not transparent for the receiving station, the software of which is expecting multicast, and not necessarily unicast, frames. If the station expects multicast traffic but receives unicast traffic, it may disregard it. Imagenio, for example, would not work, nor would many other applications such as VLC (audio and video content player program which supports multimedia videos), because they expect the IP and the port to correspond to what has been subscribed.

Document US 2007/0189290 discloses a Dynamic Efficient Encapsulated Multicasting schem which improves packet transmissions in mobile mesh networks.

Document "TR-135 Data Model for a TR_069 enable STB" defines a data model for remote management of Digital Television functionality on Set Top Bosx devices.

For example, document WO 2006/111635 describes a method and system for transmitting a multicast stream by transforming at the link level of a multicast stream the layers of an OSI model into a unicast stream at the link level of the same model, which allows taking advantage of the frame transmission ACK (acknowledgement of receipt) mechanisms of the link level inherent to the unicast transmission, and increasing the transmission rate of the information transported by the multicast stream.

On the other hand, document WO 2006/052639 describes a system and method by means of which the access point converts the multicast or broadcast packet into a unicast packet addressed to a station associated with that access point. The latter transmits the unicast packet through the communications network from the access point to the destination station. The access point can furthermore determine a minimum data rate by means of which it can transmit the multicast or broadcast packet to the station, and determine the effective rate for transmitting the unicast packet to the destination station.

As explained above, both solutions directly convert a multicast packet into one or more unicast packets and, accordingly, the multicast information would disappear.

As a result, since the previous documents use a technique based on conversion, the destination station would directly receive unicast packets with the data. Since the station is expecting multicast traffic but receives unicast traffic, since a conversion technique was used, it may disregard the traffic and therefore the service in question would not work in many cases.

Furthermore, these solutions require huge hardware and/or software changes in the set-top box, which receives packets different from what is expected, and in the actual router, which has to perform this conversion.

### Object of the Invention

To solve the aforementioned problems of the state of the art, the present invention provides a solution based on encapsulation, provided by a mechanism for tunneling multicast IP traffic by means of unicast IP tunnels. These tunnels are defined at the IP level and can be set up, as appropriate, between the provider access equipment and the set-top box (STB), or between the user's WiFi modem-router and the set-top box (STB) of the digital television distribution service, for example "Imagenio".

In the preferred embodiment which is provided, the solution is transparent for the router, and the changes in the set-top box are minimal because it continues to receive multicast packets, requiring only a terminator of the IP tunnel.

The advantages are obvious because the set-top box and the access point to the service network are usually under the control of the service provider, in accordance with the current market model, as is the case with Imagenio.

The solution that is proposed by means of the use of WiFi will allow preventing the wiring, reducing costs and problems its installation may create for the subscribers.

### Brief Description of the Drawings

Figure 1 shows a diagram of multicast traffic losses when the wiring between the modem/router and the set-top box is simply replaced with a WiFi link, without making the unicast tunnel.
Figure 2 is a diagram in which it can be seen how losses are considerably reduced using the unicast tunnel.
Figure 3 shows an embodiment of the invention.

### Detailed Description of the Invention

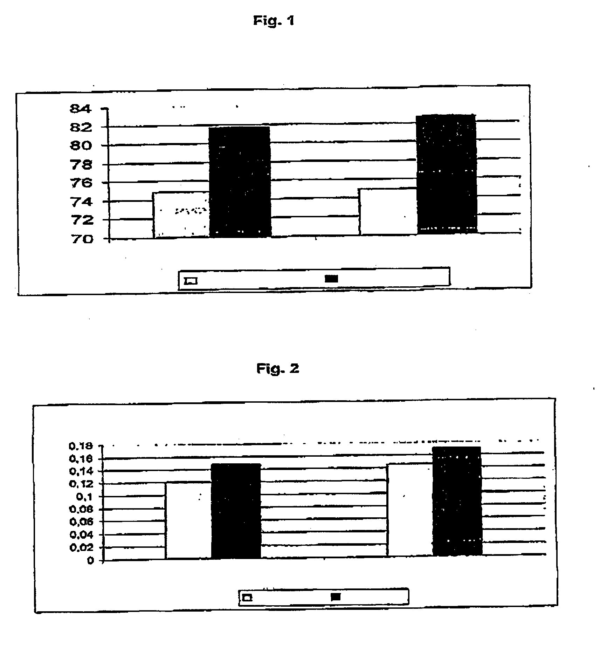

Digital television transmission is done through a multicast UDP transmission for each channel from the television server through a distribution network to the STB located in the home. Simply replacing the wiring between the modem/router and the STB with a WiFi link results in a high number of losses in traffic regardless of the distance at which the router and STB are located (obviously, within the WiFi coverage range) and a very low effective rate, i.e., poor service quality is obtained. Figure 1 shows the total packet losses and datagrams obtained with said configuration.

The reason for this low performance is based on the specification of protocols 802.11, which deals with multicast traffic in broadcast mode. For this mode, the emitting devices reduce the base rate, or minimum nominal rate, to the lowest possible rate by adding redundancy for the purpose of assuring the service to the worst possible receivers. On the other hand, WiFi does not provide ACK and retransmission at the link level for multicast/broadcast traffic, whereas it does for unicast traffic. As a result, the losses and binary rate requirements necessary for assuring the quality of the digital television service on WiFi will not be obtained. In contrast, these problems do not occur with unicast traffic.

To prevent this circumstance, a solution has been devised based on encapsulating the multicast IP traffic by means of a unicast IP tunnel. This tunnel is defined at the IP level and is set up between the provider access equipment and the set-top box (STB) of the Imagenio service or the like.

The IP tunnel can also be set up between the router and the set-top box, although in this case the solution is not transparent for the router, because in this case, when the unicast IP tunnel begins in the actual router, it requires for the router to have the required protocols implemented therein.

For this reason, the first of these cases is chosen as the preferred embodiment, in which case the IP tunnel is set up between the provider access equipment and the set-top box (STB) of the Imagenio service or the like.

It is provided that the first implementation is carried out on the IPTV (IP television) platform of Imagenio of *Telefónica,* without this being any limitation of the invention to this service in particular. Said implementation will initially be oriented towards the WiFi standard 802.11g because it is supported by the ATU-R modems of Imagenio users. Nevertheless, this solution could also apply to the WiFi standard 802.11n, because this development is based on the use of IP protocols that are completely independent of the underlying WiFi technology.

It can be seen in Figure 2 how losses are considerably reduced with the unicast tunnel. It must be pointed out that an Internet user traffic overload has been included in the unicast measurements.

The following is achieved by encapsulating the multicast IP traffic in unicast IP traffic:

It prevents the available WiFi coverage from drastically decreasing

It makes the necessary bandwidth available to assure IPTV service

As a consequence of the foregoing, an installation "without wires" of the IPTV services is made available in the subscriber's home.

Other important advantages of the invention are:

The system simplifies the installation process for Imagenio users or users of a similar service and therefore reduces the installation cost.

The system provides a larger bandwidth and an improvement in transmissions, which translates into greater quality of the digital television service.

The system will eliminate the input barrier that the introduction of wiring in the subscriber's home entails for the service.

The system will mark a difference in the Imagenio service or the like compared to other digital television platforms.

The system will provide an improvement in the provider equipment software because the equipment will have to incorporate the new functionalities required for setting up a specific type of tunnel.

### Preferred Embodiment

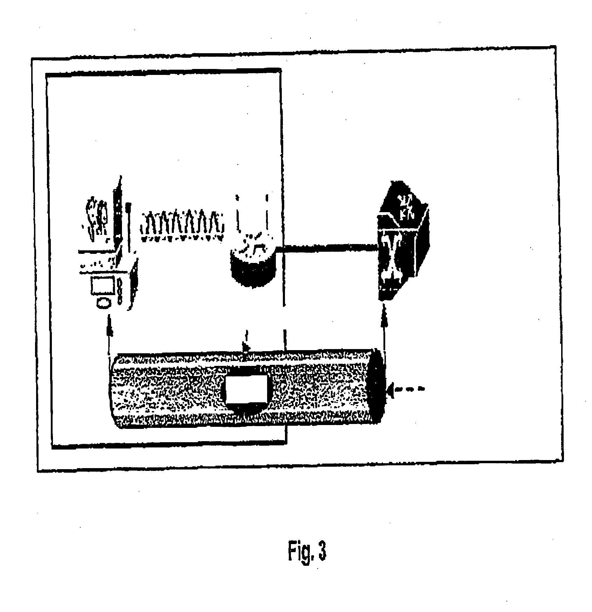

In the embodiment that is provided (see Figure 3), the IP tunnel is set up between the equipment with IP capabilities of the provider's broadband access network and the subscriber's set-top box (STB). The configuration is thus made transparent for the router and the hardware and/or software changes are made only in the access point and in the set-top box, which are under the control of the service provider.

The requirements that the different components of the system must meet are:

Access equipment: The unicast IP tunnel begins in this equipment; it must have the necessary protocols implemented therein, such as, for example, the protocol described below.

Modem-router: It must support WiFi technology, at least 802.11g, for wireless connection.

Set-top box: It must support the necessary protocols in order to be able to implement a unicast IP tunnel.

An embodiment which makes the IP tunnel between the modem/router and the set-top box can also be considered as an alternative. In this case, the system requirements would be:

Access equipment: There are no special requirements in this embodiment.

Modem-router: It must also support WiFi technology like in the preferred embodiment, but, since the unicast IP tunnel begins in this equipment, it must furthermore have the required protocols implemented therein.

Set-top box: It must support the necessary protocols in order to be able to implement a unicast IP tunnel.

The possible protocols or technologies which are included in carrying out the IP tunnel are GRE, IPsec, L2F, L2TP, PPTP, SSH and SSL/TLS tunnels, notwithstanding that once a detailed analysis of each of them is performed, the most suitable one will be chosen for its commercial implementation, or if deemed appropriate, the possibility of designing and implementing a customized protocol for masking the multicast traffic for the purpose of maximally optimizing its performance, is not discarded.

## Claims

1. A system for the distribution of broadband multimedia contents in the home, through a modem/router and a set-top box (STB), of the type replacing the wired link between the modem/router and the set-top box with a WiFi link, **characterized in that** it makes an unicast IP tunnel between the provider access point and the set-top box, encapsulating multicast packets in one or more unicast packets, without needing to convert multicast packets into unicast packets, wherein the packets reaching the set-top box, at the output of the tunnel are multicast packets.

2. A system for the distribution of broadband multimedia contents in the home through a modem/router and a set-top box (STB), of the type replacing the wired link between the modem/router and the set-top box with a WiFi link, **characterized in that** it makes an unicast IP tunnel between the modem/router and the set-top box, encapsulating multicast packets in one or more unicast packets, without needing to convert multicast packets into unicast packets, wherein the packets reaching the set-top box, at the output of the tunnel are multicast packets.

3. The system according to claims 1 or 2, wherein the IP tunnel can be implemented by means of the technology of GRE tunnels.

4. The system according to claims 1 or 2, wherein the IP tunnel can be implemented by means of the technology of L2TP tunnels.

5. The system according to claims 1 or 2, wherein the IP tunnel can be implemented by means of the technology of IPsec tunnels.

6. The system according to claims 1 or 2, wherein the IP tunnel can be implemented by means of the technology of L2F tunnels.

7. The system according to claims 1 or 2, wherein the IP tunnel can be implemented by means of the technology of PPTP tunnels.

8. The system according to claims 1 or 2, wherein the IP tunnel can be implemented by means of the technology of SSH tunnels.

9. The system according to claims 1 or 2, wherein the IP tunnel can be implemented by means of the technology of SSL/TLS tunnels.

## Patentansprüche

1. Ein System zur Verbreitung von Breitband-Multimedia-Inhalt in der Wohnung, über ein Modem/Router und eine Set-Top-Box (STB) und ersetzt die Kabelverbindung zwischen Modem/Router und die Set-Top-Box mit einem WiFi Link, **dadurch gekennzeichnet, dass** es einen Unicast-IP-Tunnel zwischen dem Anbieter und dem Access-Point-Set-Top-Box anlegt, indem es Multicast-Paketen in einem oder mehreren Unicast-Pakete verkapselt, ohne die Multicast-Paketen in Unicast-Pakete umzuwandeln, wobei die Pakete, die die Set-Top-Box erreichen, am Tunnelausgang Multicast-Pakete sind.

2. Ein System zur Verbreitung von Breitband-Multimedia-Inhalt in der Wohnung, über ein Modem/Router und eine Set-Top-Box (STB) und ersetzt die Kabelverbindung zwischen Modem/Router und die Set-Top-Box mit einem WiFi Link, **dadurch gekennzeichnet, dass** es einen Unicast-IP-Tunnel zwischen dem Modem/Router und dem Set-Top-Box anlegt, indem es Multicast-Paketen in einem oder mehreren Unicast-Pakete verkapselt, ohne die Multicast-Paketen in Unicast-Pakete umzuwandeln, wobei die Pakete, die die Set-Top-Box erreichen, am Tunnelausgang Multicast-Pakete sind.

3. Das System nach den Ansprüchen 1 oder 2, wobei der IP-Tunnel durch die Technologie der GRE Tunnel umgesetzt werden kann.

4. Das System nach den Ansprüchen 1 oder 2, wobei der IP-Tunnel durch die Technologie der L2TP-Tunnel umgesetzt werden kann.

5. Das System nach den Ansprüchen 1 oder 2, wobei der IP-Tunnel durch die Technologie der Ipsec-Tunnel umgesetzt werden kann.

6. Das System nach den Ansprüchen 1 oder 2, wobei der IP-Tunnel durch die Technologie der L2F-Tunnel umgesetzt werden kann.

7. Das System nach den Ansprüchen 1 oder 2, wobei der IP-Tunnel durch die Technologie der PPTP-Tunnel umgesetzt werden kann.

8. Das System nach den Ansprüchen 1 oder 2, wobei der IP-Tunnel durch die Technologie der SSH-Tunnel umgesetzt werden kann.

9. Das System nach den Ansprüchen 1 oder 2, wobei der IP-Tunnel durch die Technologie der SSL/TLS-Tunnel umgesetzt werden kann.

## Revendications

1. Un système pour la distribution de contenus multimédia à large bande dans les domicilies particuliers, à travers d'un modem/routeur et d'un boîtier décodeur, du type de ceux qui remplacent la connexion filaire entre le modem/routeur et le boîtier décodeur par une connexion WIFI, **caractérisé en ce qu'**il forme un tunnel IP de liaison point à point entre le point d'accès du fournisseur et le boîtier décodeur, en encapsulant des paquets multidiffusion en un ou plusieurs paquets point-à-point, sans qu'il soit nécessaire de convertir les paquets multidiffusion en des paquets point-à-point, dans lequel les paquets qui parviennent au boîtier décodeur, à la sortie du tunnel sont des paquets multidiffusion.

2. Système pour la distribution de contenus multimédia à large bande dans les domicilies particuliers, à travers d'un modem/routeur et d'un boîtier décodeur (STB par ses sigles en anglais de Set-top box), du type de ceux qui remplacent la connexion filaire entre le modem/routeur et le boîtier décodeur par une connexion WIFI, **caractérisé en ce qu'**il forme un tunnel IP point-à-point entre le modem/routeur et le boîtier décodeur, en encapsulant des paquets multidiffusion en un ou plusieurs paquets point-à-point, sans qu'il soit nécessaire de convertir les paquets multidiffusion en des paquets point-à-point, dans lequel les paquets qui parviennent au boîtier décodeur, à la sortie du tunnel sont des paquets multidiffusion.

3. Système selon les revendications 1 ou 2, dans lequel le tunnel peut être réalisé en implémentant la technologie de tunnels GRE.

4. Système selon les revendications 1 ou 2, dans lequel le tunnel IP peut être réalisé en implémentant une technologie de tunnels L2TP.

5. Système selon les revendications 1 ou 2, dans lequel le tunnel IP peut être réalisé en implémentant une technologie de tunnels IPsec.

6. Système selon les revendications 1 ou 2, dans lequel le tunnel sur IP peut être réalisé en implémentant une technologie de tunnels L2F.

7. Système selon les revendications 1 ou 2, dans lequel le tunnel IP peut être réalisé en implémentant une technologie de tunnels PPTP.

8. Système selon les revendications 1 ou 2, dans lequel le tunnel IP peut être réalisé en implémentant une technologie de tunnels SSH.

9. Système selon les revendications 1 ou 2, dans lequel le tunnel IP peut être réalisé en implémentant une technologie de tunnels SSL/TLS.
